# EUROPÄISCHE PATENTSCHRIFT

(11) **EP 0 964 937 B1**
(45) Veröffentlichungstag und Bekanntmachung des Hinweises auf die Patenterteilung: **04.10.2001**
(21) Anmeldenummer: 98910634.9
(22) Anmeldetag: 09.02.1998
(51) Int. Cl.: C22C 1/04, H01G 9/042

(54) **TANTALPULVER, VERFAHREN ZU SEINER HERSTELLUNG, SOWIE DARAUS ERHÄLTLICHE SINTERANODEN**
TANTALUM POWDER, METHOD FOR PRODUCING SAME POWDER AND SINTERED ANODES OBTAINED FROM IT
POUDRE DE TANTALE, SON PROCEDE DE PRODUCTION ET ANODES FRITTEES REALISEES A PARTIR DE CETTE POUDRE DE TANTALE

(30) Priorität: 19.02.1997 DE 19706414; 19.02.1997 DE 19706415
(43) Veröffentlichungstag der Anmeldung: 22.12.1999
(73) Patentinhaber: H.C. Starck Gmbh & Co.Kg, 38642 Goslar (DE)
(72) Erfinder: WOLF, Rüdiger, D-38690 Vienenburg (DE); REICHERT, Karlheinz, D-38304 Wolfenbüttel (DE); BIERMANN, Heike, D-38228 Salzgitter (DE); LÖFFELHOLZ, Josua, D-38685 Langelsheim (DE); BREITHAUPT, Detlef, D-38259 Salzgitter (DE)
(74) Vertreter: Drope, Rüdiger, Dr.
(86) Internationale Anmeldenummer: EP9800699
(87) Internationale Veröffentlichungsnummer: WO9837249

(56) Entgegenhaltungen:
- EP-A- 0 347 668
- DE-A- 3 840 361
- DE-A- 19 536 013
- US-A- 4 645 533
- US-A- 4 740 238

## Beschreibung

Die vorliegende Erfindung betrifft ein Tantalpulver, aus dem Tantalpulver erhältliche gepresste und gesinterte Anoden sowie Verfahren zur Herstellung von Tantalpulvern.

Metallisches Tantalpulver wird üblicherweise hergestellt durch Reduktion von K₂TaF₇ mittels Natrium. Die physikalischen Eigenschaften von Tantalpulvern, wie z. B. die Komgröße oder spezifische Oberfläche, werden durch Zugabe von Inertsalzen, wie KCI, NaCl, KF, NaF, kontrolliert. Mit steigendem Anteil an Inertsalzen verfeinert sich das resultierende Tantalpulver, d. h. es vergrößert sich somit die resultierende Metalloberfläche. Der Durchsatz an Tantalmetall in der Reduktion nimmt jedoch entsprechend der zunehmenden Inertsalzkonzentration ab.

Nach dem Auswaschen der Salze wird das Tantalpulver getrocknet und zur weiteren Reinigung einer Hochtemperaturbehandlung im Vakuum oder in Inertgasatmosphäre unterzogen. Bei diesem Agglomerierschritt wird die spezifische Oberfläche signifikant reduziert und der Sauerstoffgehalt des Pulvers deutlich erhöht. Dieser wird durch Temperaturbehandlungen mittels reduzierend wirkender Metalle, insbesondere Magnesium, wieder abgebaut. Eine weitere leichte Reduzierung der Oberfläche ist die Folge dieser reduzierenden Agglomerierung. Zur Optimierung der elektrischen Eigenschaften der aus diesen Tantalpulvern hergestellten Kondensatoren werden die Tantalpulver mit Phosphor- und/oder Bor-haltigen Dotierungsmitteln versetzt.

Die elektrischen Eigenschaften von Tantalpulvem, wie die spezifische Ladung oder der Reststrom, werden an einer gepressten, gesinterten und anschließend anodisch oxidierten, d. h. formierten Anode getestet. Die spezifische Ladung, ausgedrückt in µFV/g, ist ein Maß für die im Kondensator erzielbare Kapazität. Sie verhält sich direkt proportional zur Metalloberfläche. Der Reststrom, ausgedrückt in nA/µFV, ist ein Indikator dafür, wie gut ein Kondensator seine Ladung hält.

Gemäß EP-A-347 668 wird vorgeschlagen, die Natrium-Reduktion des K₂TaF₇ bei einer Temperatur unterhalb des Schmelzpunktes von K₂TaF₇ durchzuführen und die Tantalpulver anschließend in Gegenwart von Magnesium thermisch zu agglomerieren. Es werden spezifische Kapazitäten von 25.000 bis 30.000 µFV/g erzielt.

Bei der üblicherweise technisch durchgeführten Natrium-Reduktion von K₂TaF₇ in der Salzschmelze werden Kondensatorpulver mit spezifischen Ladungen von 18.000 bis 70.000 µFV/g wirtschaftlich hergestellt. Zur Erzielung der für hochkapazitive Kondensatoren erforderlichen Tantalpulver mit kleiner Primärteilchengröße ist es erforderlich, die Natrium-Reduktion von K₂TaF₇ größerer Verdünnung (Verdünnungssalze KCI, KF, NaCl) durchzuführen, die zu kleineren Agglomeraten führt (Sekundärteilchengröße 1 bis 5 µm, bei Primärteilchengrößen von etwa 0,3 µm). Die geringe Abmessung der Agglomerate macht es erforderlich, die Tantalpulver thermisch zu agglomerieren (Vorsintern), wobei einerseits unerwünschte Verunreinigungen entfernt werden und andererseits aber die spezifische Oberfläche wieder reduziert wird. Die bisher bekannt gewordenen höchstkapazitiven TantalKondensatorpulver werden in der DE 195 36 013 A1 beschrieben. In den daraus hergestellten gesinterten Anoden werden unter Verzicht auf den sonst üblichen thermischen Agglomerierschritt spezifische Ladungen bis 91.810 µFV/g erreicht. Diese Tantalpulver weisen störende Verunreinigungen, wie z.B. Fluorid, in Konzentrationen >100 ppm auf. Ein Teil des hohen Fluoridgehaltes wird beim Sintern der Anoden abgebaut. Die dabei freigesetzten Fluoride verursachen in den Sinteröfen thermische Korrosion. So weist ein Tantalpulver, welches nach dem Beispiel 6 aus DE 195 36 013 A1 hergestellt wurde, einen F-Gehalt von 460 ppm und einen Mg-Gehalt von 200 ppm auf. Ein weiterer Nachteil sind die hohen Restströme der daraus hergestellten Sinteranoden.

Die Restströme lassen sich bekanntermaßen durch Dotierung mit Stickstoff oder Kombinationen von Stickstoff mit anderen Elementen, wie Kohlenstoff oder Schwefel, bei mittel- und niedrigkapazitiven Pulvern mit spezifischen Ladungen <30 000 µFV/g verbessern. Dies ist in den US-A-3 427 132, US-A-3 825 802, US-A-3 984 208, US-A-4 154 609 und US-A-4 544 403 beschrieben.

Dabei wird die Stickstoffdotierung zur Senkung des Sauerstoffgehalts der Pulver, Erhöhung der Zuverlässigkeit oder Reststromverbesserung benutzt.

In der EP-A-665 302 wird darüber hinaus ein Verfahren beschrieben, welches nach der Desoxidation zu einer Oberflächennitridierung bei Temperaturen von unter 500°C mit Stickstoffgehalten <1.000 ppm und einer Reststromverbesserung von bis zu 30 % führt. Diese Methode ist jedoch ungeeignet zur Dotierung höherer Stickstoffgehalte, da bei einer Temperatur oberhalb 500°C eine unkontrollierte Umsetzung des Ta-Pulvers zu Tantalnitrid erfolgt.

In der US-A-5 448 447 wird ein Verfahren beschrieben, wobei die Nitridierung durch Stickstoffgas oder Magnesiumnitrid durchgeführt wird, welches aber auch die Dotierung höherer Gehalte zulässt. Dieses Verfahren der Nitrierung weist den Nachteil auf, dass mit einer luftempfindlichen Substanz mit schwankenden Stickstoffgehalten gearbeitet werden muss und daher eine genaue Einstellung eines bestimmten Stickstoffniveaus nur schwer reproduzierbar durchgeführt werden kann. In der JP-A-63-86509 (1988) wird die Nitridierung mit Ammoniak bei Temperaturen von 1.100°C offenbart.

All diese Verfahren beschränken sich jedoch auf Pulver mit Kapazitäten von maximal 30.000 µFV/g und Anwendungen für hohe Arbeitsspannungen >16 V (Formierspannung >70 V). Nitridierte Pulver mit Kapazitäten >30.000 µFV/g sind bisher nicht bekannt geworden.

Ein Grund dafür liegt darin, dass die beschriebenen Verfahren den Nachteil aufweisen, dass durch die schwer kontrollierbare exotherme Reaktion von Stickstoff- oder Stickstoff-haltigen Gasen, wie Ammoniak, höhere Stickstoffgehalte als 500 ppm bei feinen, oberflächenaktiveren Ta-Pulvern (BET >1,5, Kapazitäten >30.000 µFV/g) nicht homogen eingebracht werden können. Es kommt zu einem unkontrollierten Durchgehen der Reaktion, wie in der EP-A-665 302 beschrieben. Darüber hinaus weisen alle diese Verfahren den Nachteil auf, dass ein zusätzlicher Verfahrensschritt zur Nitridierung notwendig ist.

Sehr feinteilige Pulver werden durch Gasphasenreduktion von TaCl₅ mit Wasserstoff gewonnen. Dabei werden nicht mehr fließfähige, im wesentlichen diskrete Pulver erhalten. Aufgrund der technisch schwierigen Verarbeitbarkeit haben diese Pulver keinen Eingang in die Kondensator-Technologie gefunden.

Aufgabe der Erfindung ist, ein Tantalpulver bereitzustellen, das die genannten Nachteile nicht aufweist. Eine weitere Aufgabe der vorliegenden Erfindung ist die Bereitstellung eines wirtschaftlichen Verfahrens zur Herstellung von höchstkapazitiven Tantalpulvern.

Dabei verfolgt die vorliegende Erfindung den bereits in der DE-A-31 30 392 offenbarten Ansatz der schonenden reduzierenden Agglomerierung weiter, nach dem durch eine schonende Temperaturbehandlung unter Mitwirkung von reduzierenden Metallen sowohl ein Abbau der Sauerstoffgehalte als auch eine Agglomerierung (Vorversinterung) ohne wesentliche Primärkomvergröberung erzielt werden kann.

Es wurde nun gefunden, dass durch Einsatz von Wasserstoff als chemisch wirksames Agens vor oder während der reduzierenden Agglomerierung bereits bei niedriger Temperatur Agglomerate (Sinteraggregate) erzeugt werden können, die ausreichend stabil sind und frei von kritischen Verunreinigungen, wie z.B. Fluor, sind und sich daher für die Kondensator-Herstellung eignen.

Gegenstand der Erfindung sind Tantalpulver gemäß Ansprüchen 1 bis 5.

Gegenstand der Erfindung ist ferner ein Verfahren zur Herstellung der erfindungsgemäßen Tantalpulver für Kondensatoren gemäß Ansprüchen 6 bis 9.

Als Tantalpulver wird vorzugsweise ein durch Reduktion mit metallischem Natrium aus Kaliumheptafluorotantalat in einer Alkalihalogenidschmelze und anschließendem Auswaschen der Salze hergestelltes Pulver eingesetzt. Vorzugsweise erfolgt die Herstellung gemäß US-A-5 442 978 durch schrittweise Zuführung von Natrium zu der bei ca. 1.000°C gehaltenen Salzschmelze, die Tantalpentafluorid enthält. Das dabei entstehende Tantalpulver besteht aus sehr feinteiligen Primärkörnern von 100 bis 400 nm Durchmesser (ermittelt durch visuelle Auswertung von REM-Aufnahmen), die zu Agglomeraten von 1 bis 5 µm Durchmesser versintert sind. Die nach BET (Quantasorb 3-Punkt) ermittelte spezifische Oberfläche liegt bei 1,4 bis 3,5 m²/g. Zur vorläufigen Charakterisierung wird ferner häufig ein Teilchengrößenwert von 0,3 bis 0,4 µm FSSS (nach Fischer Sub Sieve Sizer) angegeben.

Dieses Tantalpulver enthält noch Fluor in Mengen von oberhalb 500 ppm bis etwa 1 000 ppm.

Das Rohtantalpulver wird nun erfindungsgemäß einer chemisch aktivierten Agglomerierung unter Einwirkung von Wasserstoff unterzogen. Dabei tritt eine teilweise Versinterung des Pulvers bei gleichzeitigem Abbau der Verunreinigungsgehalte, insbesondere des Fluors ein.

Der Wasserstoff kann erfindungsgemäß in Form einer Wasserstoff-haltigen Inertgasatmosphäre, vorzugsweise einer reinen Wasserstoffatmosphäre bereitgestellt werden. Erfindungsgemäß weiter bevorzugt ist es, den Wasserstoff in Form von unter den Bedingungen der thermischen Agglomerierung Wasserstoff abspaltenden Sauerstofffreien Verbindungen zur Verfügung zu stellen. Bevorzugte Wasserstoff abspaltende Verbindungen sind Ammoniumsalze, insbesondere Ammoniumchlorid, und Erdalkalihydride wie Calciumhydrid und Magnesiumhydrid.

Besonders bevorzugt sind Ammoniumsalze, insbesondere Ammoniumchlorid, denn sie erzielen zwei günstige Effekte zugleich, nämlich zum einen Bereitstellung des sinteraktivierenden Wasserstoffs und zum anderen die Bereitstellung des reststromverbessernden Dotiermittels Stickstoff, der in das Tantalmetall eindiffundiert und darin verbleibt.

Im Falle des Einsatzes von Wasserstoff abspaltenden Verbindungen kann die Temperatur bei der thermischen Behandlung vorteilhaft unterhalb 900°C liegen, besonders vorteilhaft im Bereich zwischen 750 und 850°C, wogegen im Falle des Einsatzes von Wasserstoffgas ein höherer Temperaturbereich zwischen 900 und 950°C bevorzugt ist.

Vorteilhaft wird die chemisch aktivierte Agglomerierung bei gleichzeitiger Anwesenheit reduzierend wirkender Metallspäne, insbesondere Magnesiumspäne, durchgeführt.

Im Anschluß an die thermische Behandlung werden die hochreaktiven Pulver durch allmählichen Luftzutritt passiviert.

Vor und/oder nach der chemisch aktivierten Agglomerierung werden vorteilhaft noch eine oder mehrere Behandlungen zur Phosphordotierung in an sich bekannter Weise durchgeführt. Hierzu wird das Pulver mit Phosphatlösung versetzt und getrocknet. Die weitere Temperaturbehandlung kann in an sich bekannter Weise reduzierend in Gegenwart von Magnesiumspänen erfolgen, so daß ein Eindiffundieren von Sauerstoff in die Pulverteilchen während dieser Temperaturbehandlung verhindert wird. Erfindungsgemäß bevorzugt wird die reduzierende Temperaturbehandlung bei Temperaturen nicht über 870°C, vorzugsweise nicht über 850°C durchgeführt.

In einer verbesserten Ausführungsform wird vor der chemisch aktivierten Agglomerierung das rohe Tantal-Primärpulver einer Naßverdichtung unterzogen. Das geschieht vorteilhaft in der Weise, daß das nach dem Waschen noch feucht vorliegende Primärpulver auf einer Schale auf einen solchen Wassergehalt eingestellt wird, daß das Pulver-Wassergemisch durch Vibration in eine thixotrope Masse verwandelt wird. Alternativ kann auch bereits getrocknetes Primärpulver neu mit Wasser angeteigt und durch Vibration in den thixotropen Zustand versetzt werden. Der dafür erforderliche Wassergehalt des Pulver-Wassergemisches liegt in der Regel bei ca. 25 Gew.-%. Das Material wird getrocknet und die erhaltenen kompakten Schollen aus verdichtetem Primärpulver werden entweder so kompakt wie sie vorliegen oder in nur grob zerkleinerter Form oder auch bereits auf die Endkörnung des herzustellenden Tantal-Kondensatorpulvers (z.B. <400µm) gemahlen und chemisch aktiv agglomeriert. Die weiteren Verfahrensschritte, wie Dotierung und reduktive Agglomerierung bei niedriger Temperatur bleiben unverändert gegenüber der zuvor beschriebenen Ausführungsform. Diese verbesserte Ausführungsform hat hauptsächlich eine Erhöhung des Schüttgewichtes und eine Verbesserung der Fließfähigkeit zur Folge. Die Naßverdichtung kann auch mittels einer wäßrigen Lösung von Ammoniumphosphat erfolgen, wenn eine anfängliche Phosphordotierung beabsichtigt ist, oder einer Lösung von Ammoniumchlorid zur Stickstoffdotierung erfolgen.

Erfindungsgemäß werden Tantalpulver erhalten, die qußerordentlich gute Eigenschaften in Bezug auf deren Verarbeitung zu Kondensatoren als auch in Bezug auf die erzielbaren elektrischen Eigenschaften der daraus herstellbaren Kondensatoren aufweisen.

Die Fließfähigkeit der Pulver liegt typischerweise zwischen 0,3 und 1 g/sec, gemessen beim Durchgang durch einen vibrierenden Trichter mit einem Öffnungswinkel von 60° und einem Auslaß von 3,9 mm Durchmesser.

Der Fluorgehalt liegt unterhalb 200 ppm, vorzugsweise unterhalb 60 ppm, so daß die Korrosion der Apparate bei der Sinterung der Kondensatoranoden in Grenzen gehalten wird und ein negativer Einfluß auf die elektrischen Eigenschaften vermieden wird.

Hinsichtlich ihrer elektrischen Eigenschaften sind die erfindungsgemäßen Pulver dadurch gekennzeichnet, daß aus ihnen nach Verpressen bei einer Preßdichte von 5 g/cm³ und durch Versinterung bei 1 200°C über 10 min und Formierung bei einer Spannung von 16 Volt Sinteranoden erhältlich sind mit einer spezifischen Ladung von 80 000 bis 120 000 µFV/g, vorzugsweise oberhalb 90 000, insbesondere bevorzugt oberhalb 100 000 µFV/g, bei einem Reststrom von weniger als 5 nA/µFV, bevorzugt weniger als 3 nA/µFV, weiter bevorzugt weniger als 1,5 nA/µFV, ganz besonders bevorzugt weniger als 1 nA/µFV. Derartige Pulver werden durch die Erfindung erstmals zur Verfügung gestellt.

Nach vorläufigen Ergebnissen scheint es, daß die geringsten Restströme unterhalb 1 nA/µFV dann erhalten werden, wenn unter Inkaufnahme von Fluorgehalten bis 200 ppm die chemisch aktivierte Agglomeration mit Wasserstoff abspaltenden Stickstoff-Verbindungen durchgeführt wird und eine Stickstoffdotierung erfolgt, so daß die Pulver Stickstoffgehalte 2 000 bis 12 000 ppm betragen.

Hinsichtlich ihrer Struktur sind die erfindungsgemäßen Tantalpulver dadurch charakterisiert, daß sie fluor- und alkaliarm sind, eine nach FSSS bestimmte Teilchengröße von 0,35 bis 1 µm, bevorzugt 0,4 bis 0,65 µm, bei einer spezifischen Oberfläche nach BET von 1,4 bis 3 m²/g aufweisen.

Nach einer anderen Charakterisierung weisen die erfindungsgemäßen fluor- und alkaliarmen Tantalpulver eine durch visuelle Auswertung von REM-Aufnahmen bestimmte Primärteilchengröße von 100 bis 400 nm, die zu Sekundärteilchen mit einer mittleren Größe von oberhalb 5 µm, ermittelt als Mastersizer D-50-Wert (ASTM-B-288), versintert sind. Bevorzugt liegen die Sekundärteilchengrößen (D 50) der versinterten Primärteilchen oberhalb 7 µm, insbesondere bevorzugt zwischen 8 und 13 µm.

Dabei wurden die Pulver vor der Bestimmung der Teilchengröße nach Mastersizer einer desagglomerierenden Ultraschallbehandlung über 5 min unterzogen, um größere Agglomerate mit unzureichender Sinterbindung zu trennen.

Die ohne desagglomerierende Ultraschall-Behandlung gemessenen Mastersizer-D-50-Werte liegen typischerweise zwischen 40 und 180 µm bzw. zwischen 40 und 100 µm, je nachdem, ob die Pulver durch ein Sieb der Maschenweite 400µ oder 220 µ gesiebt wurden.

Die erfindungsgemäßen Tantalpulver weisen bevorzugt Phosphorgehalte von 50 bis 1500 ppm, besonders bevorzugt bis 300 ppm, insbesondere bevorzugt 100 bis 200 ppm auf.

Weiter bevorzugte Tantalpulver weisen Stickstoffgehalte von 300 bis 15 000 ppm, besonders bevorzugt 1 000 bis 12 000 ppm auf.

Der Sauerstoffgehalt der erfindungsgemäßen Pulver liegt im Bereich von 3 000 µg/m² Oberfläche, d.h. zwischen 3 000 und 10 000 ppm, vorzugsweise 4 000 bis 6 000 ppm.

Die Alkaligehalte sind unterhalb 50 ppm, Erdalkaligehalte unterhalb 200 ppm, vorzugsweise unterhalb 100 ppm, Kohlenstoff unterhalb 100 ppm.

### Beispiele

### Beispiel 1

Ein Tantal-Primärpulver wurde ausgehend von einer Mischung aus 25 kg K₂TaF₇, 75 kg KCI, 75 kg KF, 1 kg eines hochfeinen Tantalpulvers und 140 g Na₂SO₄ in einer INCONEL-Retorte, durch inkrementweise Zugabe von Natrium bei einer Temperatur von ca. 900°C hergestellt, wie sie in der US-A 5 442 978 beschreiben ist. Das Tantal-Primärpulver wurde aus der erkalteten und zerkleinerten Reaktionsmischung durch Waschen mit schwach angesäuertem Wasser isoliert, wobei abschließend noch eine reinigende Behandlung mit einer Waschlösung durchgeführt wurde, die Flußsäure und Wasserstoffperoxid enthielt. Das so erhaltene Tantal-Primärpulver wies folgende Parameter auf:

| | |
|---|---|
| Durchschnittliche Korngröße mittels Fisher Sub Sieve Sizer (FSSS) | 0,35 µm |
| Spez. Oberfläche nach BET (Quantasorb 3-Punkt) | 2,42 m²/g |
| Sauerstoff | 7 230 ppm |
| Fluor | 720 ppm |

### 1. Schritt: chemisch aktivierte Agglomerierung

180 g des Tantal-Primärpulvers wurden in ein mit Tantalblech ausgekleidetes Stahlschiffchen eingebracht. Die Schichthöhe des Tantalpulvers betrug 25 mm. Das Schiffchen wurde in einem Rohr aus temperaturbeständigem Stahl untergebracht, das dann mit Argon gespült wurde, so daß die Atmosphäre im Rohr und in den Poren des Pulvers luftfrei war und nur noch aus dem Inertgas bestand. Dann wurde das Rohr mit dem beladenen Schiffchen bei weiterströmendem Argon in einem vorgeheizten Röhrenofen eingelegt und auf 950°C erhitzt. Dann wurde anstelle von Argon Wasserstoff durch das Rohr über das Pulver geleitet. Die Strömungsgeschwindigkeit des Wasserstoffs betrug ca. 1 cm/sec, bezogen auf das leere und kalte Rohr. Nach Ablauf von 1 Stunde wurde anstatt Wasserstoff wieder Argon über das Material geleitet und abgekühlt. Danach wurden kleine Eintrittsöffnungen an den Enden des Rohres geöffnet, so daß über den Zeitraum von etwa 18 Stunden allmählich Luft eindrang und die Passivierung des Materials erfolgte.

Die wichtigsten Daten des entfluoridierten Tantal-Primärpulvers sind:

| | |
|---|---|
| Durchschnittliche Korngröße mittels FSSS | 0,44 µm |
| Spez. Oberfläche nach BET (Quantasorb 3-Punkt) | 2,3 m²/g |
| Sauerstoffgehalt | 11000 ppm |
| Fluorgehalt | 120 ppm |

### 2. Schritt: Erste Dotierung mit 50 ppm Phosphor

150 g des Materials aus Schritt 1 wurden mit 7,5 ml einer Ammoniumdihydrogenphosphat-Lösung benetzt, die 1 mg Phosphor pro ml enthielt. Anschließend wurde bei 45°C getrocknet, <220 µm gesiebt und homogen gemischt.

### 3. Schritt: Reduzierende Agglomerierung

150 g des mit 50 ppm P dotierten Tantal-Primärpulvers aus Schritt 2 wurden mit 4,95 g Magnesiumspänen (= 2-fach stöchiometrische Menge) gemischt und im abgedeckten Tantaltiegel in einer Retorte unter Argonatmosphäre für 2 Stunden auf 850°C gebracht. Nach dem Abkühlen wurde durch langsames Eindringenlassen von Luft die Passivierung vollzogen.

### 4. Schritt: Säurelaugung

Die Magnesiumrückstände wurden aus dem Material mit 0,61 Säure, enthaltend 8 Gew.-% H₂SO₄ und 1,8 Gew.-% H₂O₂ herausgelaugt. Nach 10 min Aufrühren des Pulvers in dieser Säure wurde es durch Dekantieren und Abnutschen mit entmineralisierten Wasser säurefrei gewaschen.

### 5. Schritt: Zweite Dotierung zur Erhöhung des P-Gehaltes um 100 ppm auf 150 ppm

Das noch nutschenfeuchte Material wurde mit 15 ml einer Ammoniumdihydrogenphosphat-Lösung mit 1 mg P/ml benetzt und bei 45°C getrocknet. Das Material wurde <220 µm gesiebt und homogen gemischt. Es wurde als Kondensatorpulver getestet: Tabelle 1.

### Beispiel 2 (Fortsetzung von Beispiel 1)

100 g des in Beispiel 1 erhaltenen Produktes (Probe 1) wurden einer erneuten reduzierenden Agglomerierung bei 850°C für 2 Stunden mit der 2-fach stöchiometrischen Magnesium-Menge (= 1,86 g Magnesium auf 100 g Material) unterzogen. Die Laugung erfolgte mit 0,22 l Säure wie im Beispiel 1. Das säurefrei gewaschene Material wurde bei 45°C getrocknet und danach <220 µm abgesiebt und homogen gemischt. Es wurde als Kondensatorpulver getestet: Tabelle 1.

### Beispiel 3

Als Ausgangsmaterial diente wieder ein Tantal-Primärpulver, das wie in Beispiel 1 angegeben hergestellt wurde. Die wichtigsten Daten dieses Materials sind:

| | |
|---|---|
| Durchschnittliche Korngröße mittels Fisher Sub Sieve Sizer (FSSS) | 0,34 µm |
| Spez. Oberfläche nach BET (Quantasorb 3-Punkt) | 2,35 m²/g |
| Sauerstoff | 7230 ppm |
| Fluor | 740 ppm |

### 1. Schritt: Chemisch aktivierte Agglomerierung

180 g des Tantal-Primärpulvers wurden apparativ wie im Beispiel 1 in einem Stahlschiffchen im Stahlrohr bei 950°C 1 Stunde mit Wasserstoff behandelt und danach durch allmählichen Luftzutritt passiviert. Die wichtigsten Daten des so erhaltenen Materials sind:

| | |
|---|---|
| Sauerstoffgehalt | 12000 ppm |
| Fluorgehalt | 181 ppm |

### 2. Schritt: Erste Dotierung mit 100 ppm Phosphor

150 g des Materials aus Schritt 1 wurden mit 15 ml einer Ammoniumdihydrogenphosphat-Lösung benetzt, die 1 mg Phosphor pro ml enthielt. Anschließend wurde das Material bei 45°C getrocknet, <220 µm gesiebt und homogen gemischt.

### 3. Schritt: Reduzierende Agglomerierung

150 g des mit 100 ppm P dotierten Tantal-Primärpulvers wurden mit 5,4 g Magnesiumspänen (2-fach stöchiometrischer Menge) gemischt und apparativ wie im Beispiel 1 für 2 Stunden bei 800°C desoxidiert und danach durch langsamen Lufzutritt passiviert.

### 4. Schritt: Säurelaugung

Die Magnesiumrückstände wurden mit 0,65 l Säure wie im Beispiel 1 beschrieben, herausgelaugt, und das Material wurde säurefrei gewaschen.

### 5. Schritt: Zweite Dotierung zur Erhöhung des Phosphorgehaltes von 100 auf 150 ppm

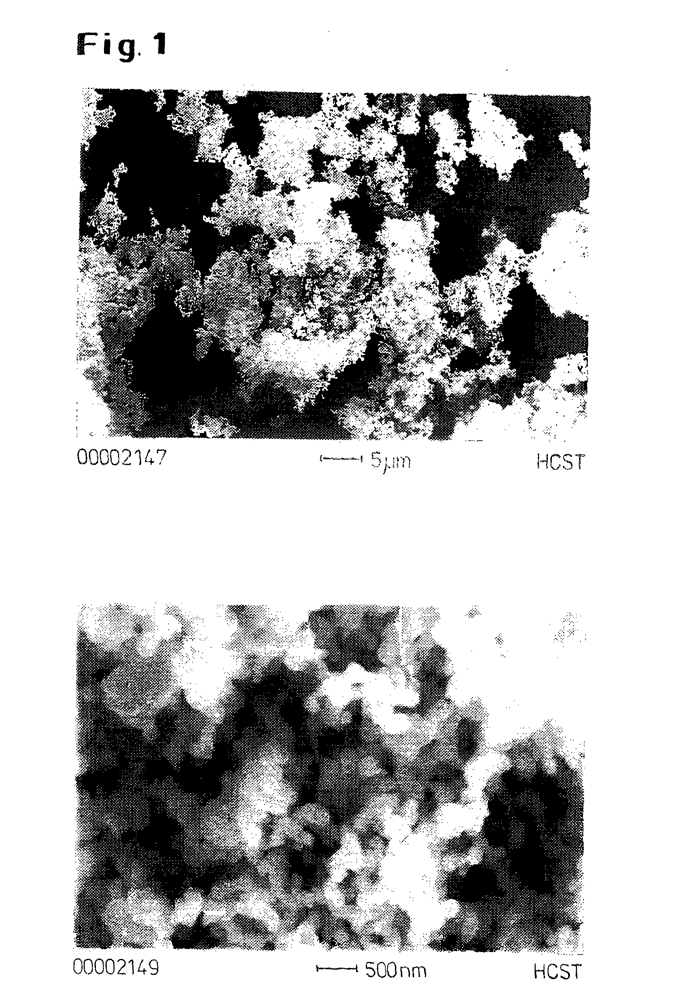

Das nutschenfeuchte Material wurde mit 7,5 ml einer Ammoniumdihydrogenphosphat-Lösung mit 1 mg P/ml benetzt und bei 45°C getrocknet, <220 µm gesiebt und homogen gemischt. Fig. 1 zeigt eine REM-Aufnahme dieses Pulvers in zwei verschiedenen Vergrößerungen. Die daraus erkennbare Primärteilchengröße liegt unterhalb 300 nm. Der Mastersizer-D-50-Wert wurde zu 48 µm ermittelt. Nach 5-minütiger Desagglomerierung mit Ultraschall beträgt dieser Wert noch 5,32 µm. Es wurde als Kondensatorpulver getestet: Tabelle 2.

### Beispiel 4

Als Ausgangsmaterial diente ein Tantal-Primärpulver, das dem des in Beispiel 3 verwendeten entspricht. Dabei wurde die abschließende Waschung nur mit Wasserstoffperoxid-haltigem Waschwasser durchgeführt. Die wichtigsten Daten dieses Primärpulvers sind:

| | |
|---|---|
| Durchschnittliche Korngröße mittels Fisher Sub Sieve Sizer (FSSS) | 0,35 µm |
| Spez. Oberfläche nach BET (Quantasorb 3-Punkt) | 2,42 m²/g |
| Sauerstoff | 8000 ppm |
| Fluor | 186 ppm |

### 1. Schritt: Erste Dotierung auf 100 ppm P

1 kg des Tantal-Primärpulvers wurde mit 100 ml einer Ammoniumdihydrogenphosphat-Lösung benetzt, die 1 mg Phosphor pro ml enthielt. Anschließend wurde das Material bei 45°C getrocknet, <220 µm gesiebt und homogen gemischt.

### 2. Schritt: Chemisch aktivierte Agglomeration

Das mit 100 ppm P dotierte Tantal-Primärpulver wurde mit 24 g Magnesiumspänen gemischt und im abgedeckten Tantaltiegel in einer Retorte unter Argonatmosphäre 2 Stunden auf 800°C gehalten. Nach dem Abkühlen wurde durch langsames Eindringen von Luft die Passivierung vollzogen.

### 3. Schritt: Säurelaugung

Die Magnesiumrückstände wurden mit 3 l Säure wie im Beispiel 1 beschrieben aus dem Material herausgelöst, dekantiert, abgenutscht und mit entmineralisiertem Wasser säurefrei gewaschen.

### 4. Schritt: Zweite Dotierung zur Erhöhung des Phosphorgehaltes von 100 auf 150 ppm.

Das noch nutschenfeuchte Material wurde mit 50 ml einer Ammoniumdihydrogenphosphat-Lösung benetzt, so daß der P-Gehalt um 50 ppm erhöht wurde. Es wurde bei 45°C getrocknet, <220 µm gesiebt und homogen gemischt. Das Material wurde als Kondensatorpulver getestet: Tabelle 3.

### Beispiel 5

Als Ausgangsmaterial dient das für Beispiel 1 verwendete Tantal-Primärpulver.

### 1. Schritt: Chemisch aktivierte Agglomerierung

Es wurde ebenso verfahren wie im Beispiel 1 beschrieben. Die Zusammensetzung des erhaltenen Materials war ähnlich (1,2 % O und 151 ppm F).

### 2. Schritt: Erste Dotierung auf 100 ppm Phosphor.

150 g des Materials aus Schritt 1 wurden mit 15 ml Ammoniumdihydrogenphosphat-Lösung benetzt, die 1 mg Phosphor pro ml enthielt und bei 45°C getrocknet, <220 µm gesiebt und homogen gemischt.

### 3. Schritt: Reduzierende Agglomerierung

150 g des mit 100 ppm P dotierten Materials aus Schritt 2 wurden mit 5,4 g Mg (= 2-fach stöchiometrische Menge) gemischt und apparativ wie in Beispiel 1 desoxidiert, jedoch bei 900°C für 2 Stunden. Nach dem Abkühlen wurde langsames Eindringen von Luft schonend passiviert.

### 4. Schritt: Säurelaugung

Die Magnesiumrückstände wurden mit 0,65 l Säure wie im Beispiel 1 beschrieben herausgelöst, und das Material wurde durch Dekantieren und Abnutschen mit entmineralisiertem Wasser säurefrei gewaschen.

### 5. Schritt: Zweite Dotierung zur Erhöhung des Phosphorgehaltes von 100 auf 150 ppm.

Das noch nutschenfeuchte Material wurde mit 7,5 ml einer Ammoniumdihydrogenphosphat-Lösung mit 1 mg P/ml benetzt und bei 45°C getrocknet. Das Material wurde <220 µm gesiebt und homogen gemischt. Es wurde als Kondensatorpulver getestet: Tabelle 4.

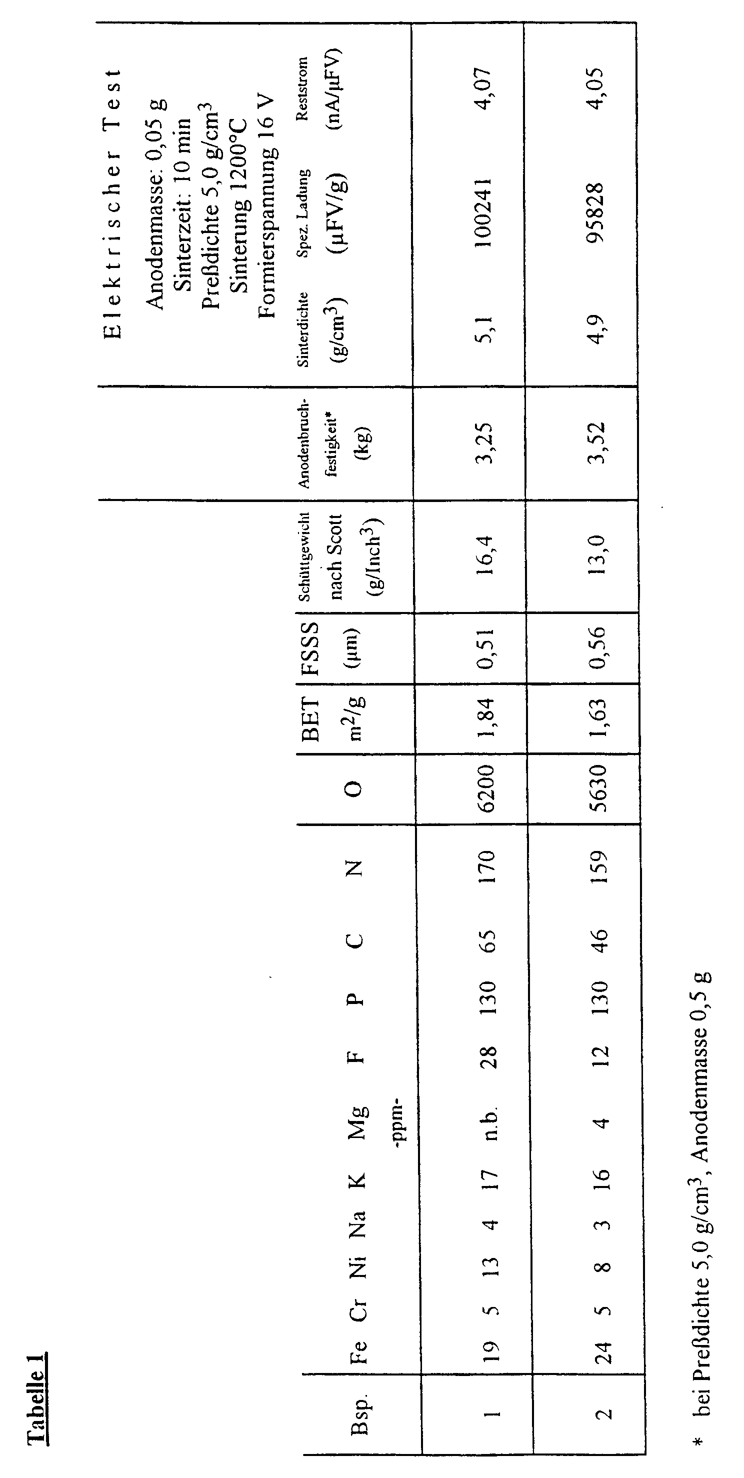

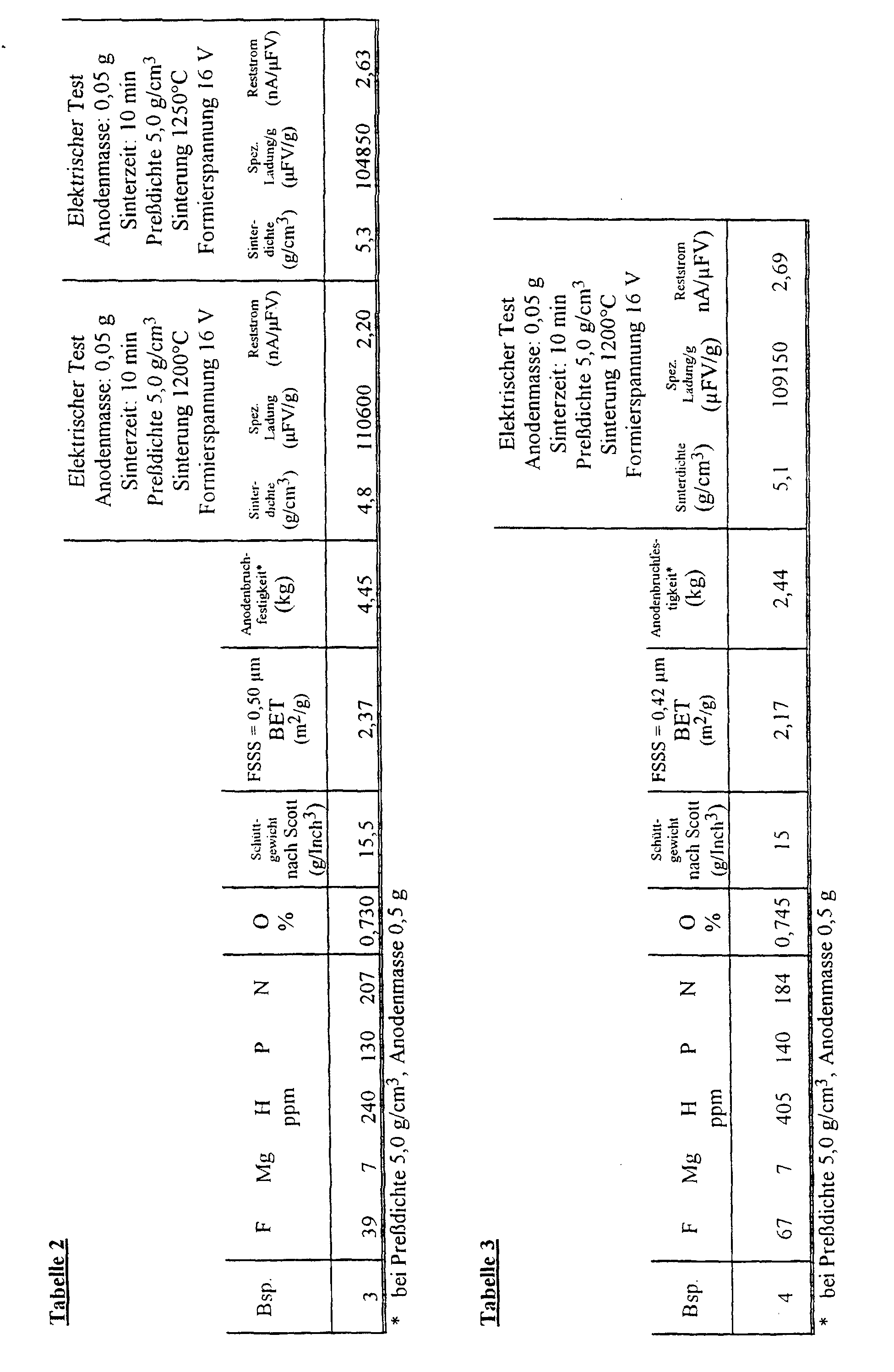

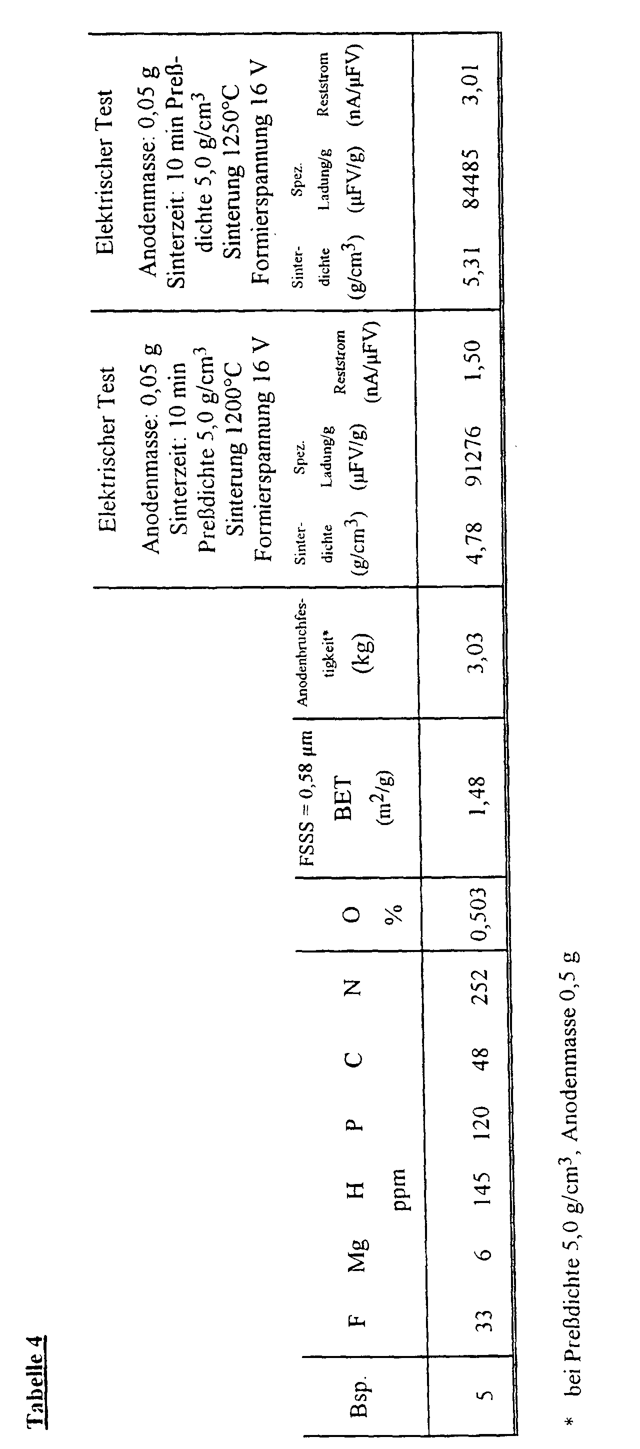

### Beispiel 6

Es wurde ein Tantal-Primärpulver wie in Beispiel 4 eingesetzt.

### 1. Schritt: Erste Dotierung mit 100 ppm Phosphor

300 g des Tantal-Primärpulvers werden mit 30 ml einer Ammoniumdihydrogenphosphat-Lösung benetzt, die 1 mg Phosphor pro ml enthielt. Anschließend wurde bei 45°C getrocknet, <220 µm gesiebt und homogen gemischt.

### 2. Schritt: Chemisch aktivierte Agglomerierung

300 g des mit 100 ppm P dotierten Primärpulvers wurden mit 6,5 g Magnesiumspänen gemischt und im abgedeckten Tantaltiegel in einer Retorte unter Argonatmosphäre für 2 Stunden auf 850°C gebracht. Nach dem Abkühlen wurde durch langsames Eindringenlassen von Luft eine Passivierung vollzogen.

### 3. Schritt: Säurelaugung

Die Magnesiumrückstände wurden aus dem Material mit 0,8 l Säure, enthaltend 8 Gew.-% H₂SO₄ und 1,8 % H₂O₂ herausgelaugt. Nach 10 min Aufrühren des Pulvers in dieser Säure wurde es durch Dekantieren und Abnutschen mit entmineralisiertem Wasser säurefrei gewaschen.

### 4. Schritt: Zweite Dotierung zur Erhöhung des P-Gehaltes um 50 ppm auf 150 ppm

Das noch nutschenfeuchte Material wurde mit 15 ml einer Ammoniumdihydrogenphosphat-Lösung mit 1 mg P/ml benetzt. Es wurde bei 45°C getrocknet. Das Material wurde auf <220 µm gesiebt und homogen gemischt. Das Material wurde als Kondensatorpulver getestet: Tabelle 5.

### Beispiel 7

300 g des wie in Beispiel 4, Schritt 1 dotierten Materials wurden mit der 2fachen stöchiometrischen Menge an Magnesium (bezogen auf den Sauerstoffgehalt) und 1 % NH₄Cl gemischt und 2 Stunden bei 850°C desoxidiert und nitridiert.

Die Laugung erfolgte mit 0,8 l Säure wie im Beispiel 6. Das säurefrei gewaschene Material wurde bei 45°C getrocknet und danach <220 µm abgesiebt und homogen gemischt. Es wurde als Kondensatorpulver getestet: Tabelle 5.

### Beispiel 8

300 g des wie in Beispiel 4, Schritt 1, dotierten Materials wurden einer chemisch aktivierten Agglomeration unterzogen, bei der ein noch höherer Stickstoff-Gehalt angestrebt wurde. Dazu wurde das Ta-Pulver mit der 2fachen stöchiometrischen Menge an Magnesium und 6 % NH₄Cl gemischt und 2 Stunden bei 850°C temperaturbehandelt.

Die Laugung erfolgte mit 0,8 l Säure wie im Beispiel 6. Das säurefrei gewaschene Material wurde bei 45°C getrocknet und danach <220 µm abgesiebt und homogen gemischt. Es wurde als Kondensatorpulver getestet: Tabelle 5.

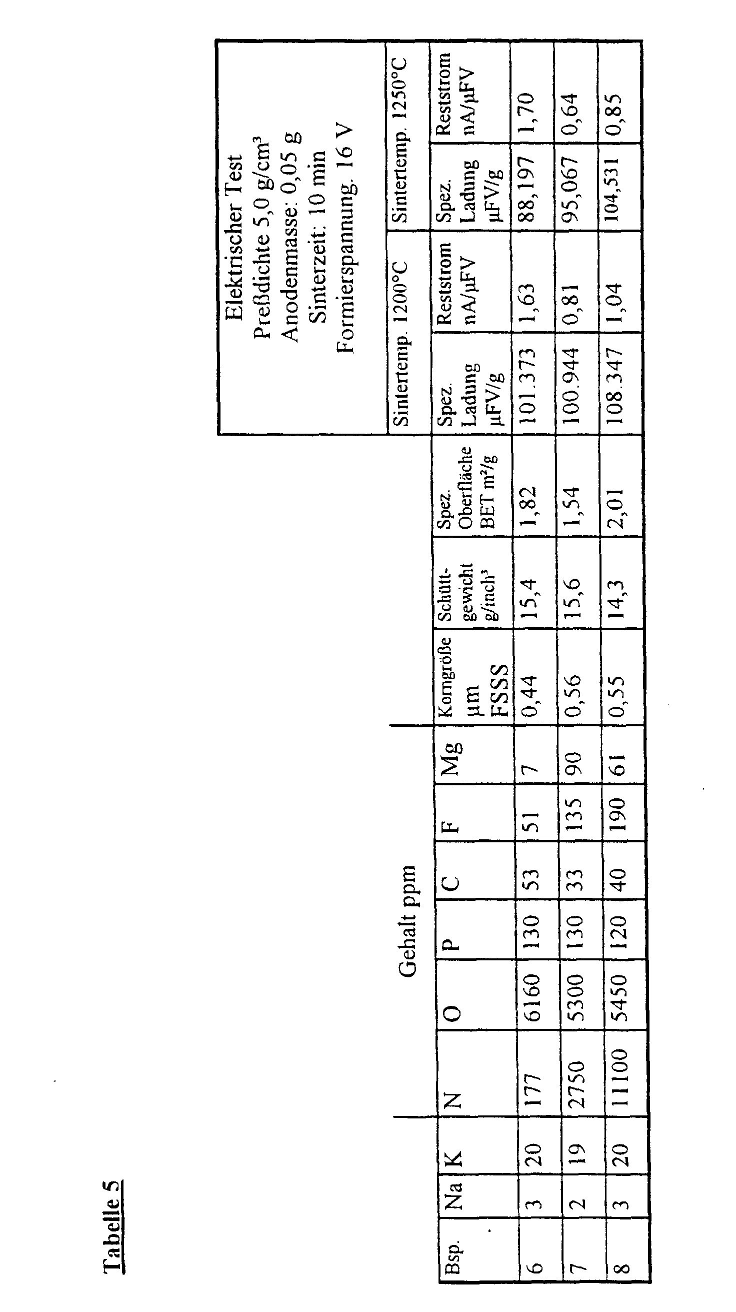

### Beispiel 9

Als Ausgangsmaterial dient ein Tantal-Primärpulver, das nach dem Rezept von Beispiel 1 durch Reduktion von K2TaF7 hergestellt worden ist, es ist auch einer Waschung mit einer Wachlösung unterzogen worden, die Flußsäure und Wasserstoffperoxid enthielt. Eine getrocknete repräsentative Probe des erhaltenen Primärpulvers wies folgende Parameter auf:

| | |
|---|---|
| Durchschnittliche Korngröße mittels Fisher Sub Sieve Sizer (FSSS) | 0,36 µm |
| Spez. Oberfläche nach BET (Quantasorb 3-Punkt-Messung) | 2,19 qm/g |
| Schüttgewicht | 11,2 g/inch³ |
| Sauerstoff | 0,658 % |
| Fluor | 596 ppm |

### 1. Schritt: Naßverdichtung, Trocknung und Zerkleinerung

240 g des noch feuchten Primärpulvers wurden auf einer Porzellanschale unter Umwenden mit einem Löffel und Vibration auf einer Vibrationsplatte mit soviel Wasser versetzt, daß eine thixotrope Konsistenz der Masse zustande kam. Um eine Vergleichmäßigung dieser Beschaffenheit zu bewirken, wurde die Schale mit dem Material 3 min den Vibrationen ausgesetzt. Anschließend wurde das Material auf der Schale, auf der es sich breitgelaufen befand, bei 45°C im Umlufttrockenschrank schonend getrocknet. Das verdichtete und getrocknete Primärpulver lag in Form schwerer, relativ fester grober Schollen vor. Diese wurden vorsichtig durch ein 400 µm-Sieb gedrückt.

### 2. Schritt: Chemisch aktivierte Agglomeration

Das verdichtete und <400 µm gekörnte Primärpulver wurde in einem Tantal-ausgekleideten Stahlschiffchen in einer Schichthöhe von 25 mm in einem Rohr aus temperaturbeständigem Stahl untergebracht, und wie im Beispiel 1 beschrieben, bei 950°C 1 Stunde lang mit Wasserstoff entfluoridiert und mit Luft passiviert.

### 3. Schritt: Zerkleinerung

Das so erhaltene Primärpulver wurde über ein 400 µm-Sieb passiert, wobei sich größer gewachsene Aggregate leicht auf die Körnung <400 µm zerdrücken ließen. Der Sauerstoff-Gehalt betrug 1,1 %.

### 4. Schritt: Dotierung

Es lagen 180 g des Materials aus Schritt 3 mit der Körnung <400 µm vor. Um diese auf 150 ppm Phosphor zu dotieren, wurden sie mit 27 ml einer Ammoniumdihydrogenphosphat-Lösung benetzt, die 1 mg Phosphor pro ml enthält. Anschließend wurde bei 45°C getrocknet, <400 µm gesiebt und homogen gemischt.

### 5. Schritt: Reduzierende Agglomerierung

Die 180 g des dotierten Primärpulvers wurden mit 5,94 g Magnesiumspänen (= 2fach stöch. Menge) gemischt und im abgedeckten Tantaltiegel in einer Retorte unter Argonatmosphäre für 2 Stunden auf 800°C gebracht. Nach dem Abkühlen wurde durch langsames Eindringenlassen von Luft die Passivierung vollzogen.

### 6. Schritt: Säurelaugung

Die Magnesiumrückstände werden aus dem Material mit 0,7 l Säure, enthaltend 8 Gew.-% H₂SO₄ und 1,8 Gew.-% H₂O₂ herausgelaugt. Nach 10 min Aufrühren des Pulvers in dieser Säure wurde das Material durch Dekantieren und Abnutschen mit entmineralisiertem Wasser säurefrei gewaschen. Das Material wurde <400 µm gesiebt und homogen gemischt und als Kondensatorpulver getestet: Tabelle 6.

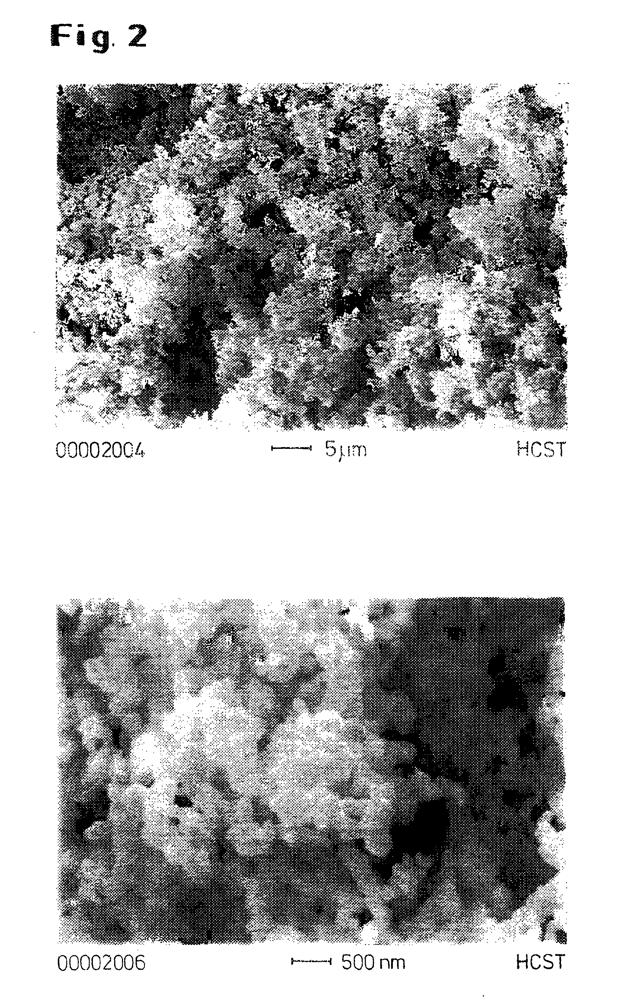

Fig. 2 zeigt eine REM-Aufnahme des Pulvers in 2 Vergrößerungen. Die visuell ermittelte Primärkorngröße liegt bei etwa 200 nm. Der D-50-Wert nach Mastersizer beträgt 164 µm. Nach 5-minütiger Ultraschallbehandlung beträgt der D-50-Wert noch 11,3 µm.

### Beispiel 10

Als Ausgangsmaterial dient wieder ein Tantal-Primärpulver, das nach dem Rezept von Beispiel 1 aus K2TaF7 hergestellt worden ist. Die abschließende Waschung wurde nur mit Wasserstoffperoxid-haltigem Wasser durchgeführt. Die wichtigsten Daten dieses Primärpulvers sind an einer getrockneten repräsentativen Probe bestimmt worden:

| | |
|---|---|
| Durchschnittliche Korngröße mittels Fisher Sub Sieve Sizer (FSSS) | 0,36 µm |
| Spez. Oberfläche nach BET (Quantasorb 3-Punkt-Messung) | 2,45 m/g |
| Schüttgewicht | 11,6 g/inch³ |
| Sauerstoff | 0,794 % |
| Fluor | 215 ppm |

### 1. Schritt: Naßverdichtung, Trocknung und Zerkleinerung

350 g des noch feuchten Primärpulvers wurden wie im Beispiel 9 mit weiterem Wasser unter Vibration zu einer Masse mit thixotroper Konsistenz verwandelt. Nach dem schonenden Trocknen bei 45°C lag das Material in Form schwerer, relativ fester Schollen vor. Diese wurden nur manuell zu zentimetergroßen Stücken zerbröckelt.

### 2. Schritt: Chemisch aktivierte Agglomeration

Das verdichtete stückige Primärpulver wurde wie im Beispiel 9 mit Wasserstoff entfluoridiert und mit Luft passiviert.

### 3. Schritt: Zerkleinerung

Das aus Schritt 2 erhaltene Material wurde mit einer Labor-Schlagmühle bei niedriger Drehzahl und unter Argonspülung schonend auf die >Körnung <400 µm gemahlen. Der Sauerstoff-Gehalt wurde zu 1,4 % bestimmt.

### 4. Schritt: Dotierung

260 g des aus Schritt 3 erhaltenen Materials mit der Körnung <400 µm wurden auf 150 ppm Phosphor dotieren, indem es mit 39 ml einer Ammoniumdihydrogenphosphat-Lösung benetzt wurde, die 1 mg Phosphor pro ml enthält. Anschließend wurde bei 45°C getrocknet, <400 µm gesiebt und homogen gemischt.

### 5. Schritt: Reduzierende Agglomerierung

Die 260 g dotiertes Primärpulver wurden mit 10,9 g Magnesiumspänen (= 2fach stöch. Menge) gemischt und im abgedeckten Tantaltiegel in einer Retorte unter Argonatmosphäre für 2 Stunden auf 800°C gebracht und nach dem Erkalten allmählichen Luftzutritt passiviert.

### 6. Schritt: Säurelaugung

Die Magnesiumrückstände werden aus dem Material mit 1,1 l Säure, enthaltend 8 Gew.-% H₂SO₄ und 1,8 Gew.-% H₂O₂ herausgelaugt. Nach 10 min Aufrühren des Pulvers in dieser Säure wird das Material durch Dekantieren und Abnutschen mit entmineralisiertem Wasser säurefrei gewaschen. Das Material wird <400 µm gesiebt und homogen gemischt und als Kondensatorpulver getestet: Tabelle 6.

### Beispiel 11

### 1. Schritt: Naßverdichtung mit Dotierung, Trocknung und Zerkleinerung

Von dem im Beispiel 10 verwendeten Primärpulver wurde nun 200 g in getrockneter Form eingesetzt und mit 150 ppm Phosphor dotiert, indem die Pulvermenge auf einer Porzellanschale mit 30 ml einer Ammoniumdihydrogenphosphat-Lösung benetzt wurde, die 1 mg Phosphor pro ml enthält. Dann wurde solange portionsweise weiteres Wasser unter Rühren und Vibration zugesetzt, bis die Masse einen thixotropen Zustand annahm. Das Material wurde in der Schale in der es angeteigt worden war, bei 45°C getrocknet und die gebildeten relativ festen Schollen wurden von Hand in zentimetergroße Stücke zerbrochen.

### 2. Schritt: Chemisch aktivierte Agglomerierung

Das dotierte und verdichtete stückige Primärpulver wurde wie im Beispiel 9 mit Wasserstoff behandelt und mit Luft passiviert.

### 3. Schritt: Zerkleinerung

Das aus Schritt 2 erhaltene Material wurde wie im Beispiel 9 mit einer Labor-Schlagmühle auf die Körnung <400 µm gemahlen. Das Material wies folgende Daten auf:

| | |
|---|---|
| Schüttgewicht | 28 g/inch³ |
| Spez. Oberfläche nach BET (Quantasorb 3-Punkt-Messung) | 2,27 m²/g |
| Sauerstoff | 1,3 % |
| Fluor | 70 ppm |

### 4. Schritt: Reduzierende Agglomerierung

180 g des aus Schritt 3 erhaltenen Materials mit der Körnung <400µm wurden mit 7,02 g Magnesiumspänen (= 2fach stöch. Menge) gemischt wie im Beispiel 6 bei 800°C 2 Stunden lang desoxidiert und passiviert.

### 5. Schritt: Säurelaugung

Die Magnesiumrückstände werden aus dem Material mit 1,1 l Säure, enthaltend 8 Gew.-% H₂SO₄ und 1,8 Gew.-% H₂O₂ nach der im Beispiel 6 beschriebenen Verfahrensweise herausgelaugt. Danach wird das Material neutral gewaschen. Es wird <400 µm gesiebt, homogen gemischt und als Kondensatorpulver getestet: Tabelle 6.

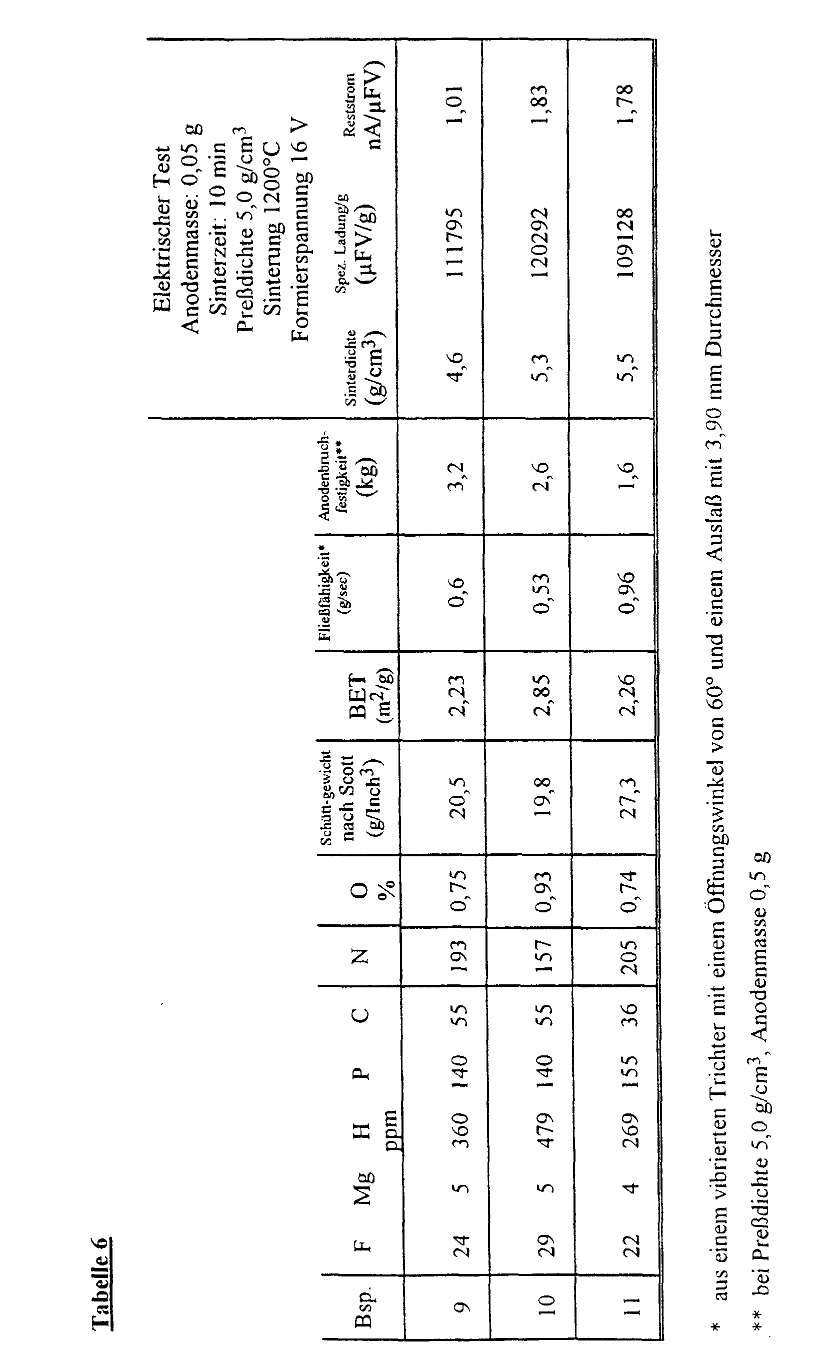

## Patentansprüche

1. Tantalpulver mit einem Alkaligehalt von weniger als 50 ppm und einem Fluorgehalt von weniger als 200 ppm, mit einer nach FSSS bestimmten Teilchengröße von 0,35 bis 1 µm und einer spezifischen Oberfläche nach BET von 1,4 bis 3 m²/g und einer visuell aus REM-Aufnahmen bestimmten Primärteilchengröße von 100 bis 400 nm und einer durch Versinterung der Primärteilchen definierten Sekundärteilchengröße von oberhalb 5 µm bestimmt als D-50-Wert nach Mastersizer.

2. Tantalpulver nach Anspruch 1 mit einem Fluorgehalt von weniger als 60 ppm.

3. Tantalpulver nach Anspruch 1 oder 2, **gekennzeichnet dadurch**, dass aus ihnen **durch** Versinterung bei 1.200°C über 10 min und Formierung bei 16 V Kondensatoren mit einer spezifischen Ladung von 80.000 bis 120.000 µFV/g bei einem Reststrom von weniger als 5 nA/µFV erhältlich sind.

4. Tantalpulver nach einem der Ansprüche 1 bis 3 mit einem Phosphorgehalt von 50 bis 500 ppm.

5. Tantalpulver nach einem der Ansprüche 1 bis 4 mit einem Stickstoffgehalt von 30 bis 15.000 ppm.

6. Verfahren zur Herstellung von Tantalpulvern nach einem der Ansprüche 1 bis 5 aus durch Reduktion von Kaliumheptafluorotantalat mittels Natrium in einer Inertsalzschmelze gewonnenen Rohtantalpulver mit einer Primärteilchengröße von 100 bis 400 nm, **dadurch gekennzeichnet, dass** das Rohtantalpulver in Gegenwart von Wasserstoff bei einer Temperatur von 600 bis 950°C reduzierend agglomeriert wird.

7. Verfahren nach Anspruch 6, **dadurch gekennzeichnet, dass** der Wasserstoff als Wasserstoffatmosphäre oder in Form von Wasserstoff abspaltenden Verbindungen bereitgestellt wird.

8. Verfahren nach Anspruch 6 oder 7, **dadurch gekennzeichnet, dass** das Tantalpulver ein- oder mehrstufig, insbesondere 2-stufig, mit Phosphor- oder Phosphorverbindungen versetzt wird und anschließend bei Temperaturen von 800 bis 870°C desoxidierend in Gegenwart von Magnesiumspänen behandelt wird.

9. Verfahren nach einem der Ansprüche 6 bis 8, **dadurch gekennzeichnet, dass** das Rohtantalpulver vor der reduzierenden Agglomeration durch Aufschlämmung in Wasser oder einer Phosphorsalzlösung naßverdichtet und getrocknet wird.

10. Tantalanoden für Kondensatoren, hergestellt aus Tantalpulver nach einem der Ansprüche 1 bis 3.

11. Kondensatoren, enthaltend Tantalanoden nach Anspruch 10.

## Claims

1. Tantalum powder with an alkali content of less than 50 ppm and a fluorine content of less than 200 ppm, with a particle size determined by FSSS of 0.35 to 1 µm and a BET specific surface area of 1.4 to 3 m²/g and a primary particle size determined visually from SEM micrographs of 100 to 400 nm and a secondary particle size defined by sintering of the primary particles of above 5 µm determined as a Mastersizer D50 value.

2. Tantalum powder according to claim 1 with a fluorine content of less than 60 ppm.

3. Tantalum powder according to claim 1 or 2, **characterised in that** capacitors having specific capacitance values of 80000 to 120000 µFV/g at residual current values of less than 5 nA/µFV are obtainable therefrom by sintering at 1200°C for 10 minutes and forming at 16 V.

4. Tantalum powder according to one of claims 1 to 3 with a phosphorus content of 50 to 500 ppm.

5. Tantalum powder according to one of claims 1 to 4 with a nitrogen content of 30 to 15000 ppm.

6. Process for the production of tantalum powders according to one of claims 1 to 5 from crude tantalum powder with a primary particle size of 100 to 400 nm obtained by reduction of potassium heptafluorotantalate by means of sodium in an inert salt melt, **characterised in that** the crude tantalum powder is agglomerated under reducing conditions in the presence of hydrogen at a temperature of 600 to 950°C.

7. Process according to claim 6, **characterised in that** the hydrogen is provided as a hydrogen atmosphere or in the form of hydrogen-eliminating compounds.

8. Process according to claim 6 or 7, **characterised in that** the tantalum powder is combined in one or multiple stages, in particular in two stages, with phosphorus or phosphorus compounds and is then subjected to deoxidising treatment at 800 to 870°C in the presence of magnesium chips.

9. Process according to one of claims 6 to 8, **characterised in that**, before the reducing agglomeration, the crude tantalum powder is wet compacted by being suspended in water or a phosphorus salt solution and is dried.

10. Tantalum anodes for capacitors produced from tantalum powder according to one of claims 1 to 3.

11. Capacitors containing tantalum anodes according to claim 10.

## Revendications

1. Poudre de tantale ayant une teneur en alcali inférieure à 50 ppm et une teneur en fluor inférieure à 200 ppm, avec une taille de particules déterminée selon FSSS (*Fischer Sub Sieve Sizer*) de 0,35 à 1 µm, une surface spécifique BET de 1,4 à 3 m²/g, une taille de particules primaires déterminée visuellement au microscope électronique à balayage de 100 à 400 nm, et une taille de particules secondaires définie par frittage des particules primaires supérieures à 5 µm, déterminée comme valeur D-50 au Master Sizer.

2. Poudre de tantale selon la revendication 1, ayant une teneur en fluor inférieure à 60 ppm.

3. Poudre de tantale selon la revendication 1 ou 2, **caractérisée en ce que** l'on peut obtenir à partir de celle-ci, par frittage à 1 200°C pendant 10 minutes et moulage à 16V, des condensateurs ayant une charge spécifique de 80 000 à 120 000 µFV/g avec un courant résiduel inférieur à 5 nA/µFV.

4. Poudre de tantale selon l'une des revendications 1 à 3, ayant une teneur en phosphore de 50 à 500 ppm.

5. Poudre de tantale selon l'une des revendications 1 à 4, ayant une teneur en azote de 30 à 15 000 ppm.

6. Procédé de préparation de poudres de tantale selon l'une des revendications 1 à 5 à partir de poudres de tantale brutes, obtenues par réduction d'heptafluorotantalate de potassium avec du sodium dans une masse fondue de sels inertes, et ayant une taille de particules primaires de 100 à 400 nm, **caractérisé en ce que** l'on agglomère dans des conditions réductrices la poudre de tantale brute en présence d'hydrogène à une température de 600 à 950°C.

7. Procédé selon la revendication 6, **caractérisé en ce que** l'on prépare l'hydrogène sous forme d'une atmosphère d'hydrogène ou sous forme de composés libérant de l'hydrogène.

8. Procédé selon la revendication 6 ou 7, **caractérisé en ce que** l'on ajoute à la poudre de tantale, en une ou plusieurs étapes, en particulier en 2 étapes, du phosphore ou des composés du phosphore et on la traite ensuite à des températures de 800 à 870°C dans des conditions désoxydantes en présence de tournures de magnésium.

9. Procédé selon l'une des revendications 6 à 8, **caractérisé en ce que**, avant l'agglomération dans des conditions réductrices, on comprime à l'état humide la poudre de tantale brute par mise en suspension dans de l'eau ou une solution de sel de phosphore et on la sèche.

10. Anodes de tantale pour condensateurs, préparées à partir de poudres de tantale selon l'une des revendications 1 à 3.

11. Condensateurs contenant des anodes de tantales selon la revendication 10.
